# EUROPÄISCHE PATENTSCHRIFT

(11) **EP 1 862 055 B1**
(45) Veröffentlichungstag und Bekanntmachung des Hinweises auf die Patenterteilung: **10.05.2017**
(21) Anmeldenummer: 07103435.9
(22) Anmeldetag: 02.03.2007
(51) Int. Cl.: A01D 41/12, A01D 75/28

(54) **Verteilvorrichtung zum Verteilen von aus einer Erntemaschine austretendem Erntegut**
Distribution device for distributing crops being discharged from a harvester
Dispositif de répartition destiné à la répartition d'épinards sortant d'une hacheuse

(30) Priorität: 01.06.2006 DE 102006026041
(43) Veröffentlichungstag der Anmeldung: 05.12.2007
(73) Patentinhaber: CLAAS Selbstfahrende Erntemaschinen GmbH, 33428 Harsewinkel (DE)
(72) Erfinder: Jeppe, Eckehard, 34289, Zierenberg (DE); Niermann, Martin, 33428, Harsewinkel (DE); Nollmann, Jürgen, 33775, Versmold (DE); Brinkmann, Jörn, 33428, Harsewinkel (DE); Amsbeck, Dieter, 33428, Harsewinkel (DE); Hornberg, Oliver, 33602, Bielefeld (DE)

(56) Entgegenhaltungen:
- EP-A- 0 537 621
- EP-A- 1 522 215
- EP-A- 1 690 447
- WO-A-2005/102027
- DE-A1- 19 823 347
- FR-A- 2 651 957
- GB-A- 2 165 732
- US-A- 5 569 081
- US-A1- 2003 109 293

## Beschreibung

Die Erfindung betrifft einen Mähdrescher mit einer Verteilvorrichtung zum Verteilen von aus dem Mähdrescher austretendem Erntegut nach dem Oberbegriff des Anspruchs 1.

Eine Verteileinrichtung für aus einer Erntemaschine austretendes Häckselgut ist aus der DE 38 38 936 bekannt. Die Verteilvorrichtung ist hinter einem Strohhäcksler angeordnet und weist verstellbare Leitbleche auf, mit denen das aus dem Strohhäcksler austretende Häckselgut umgelenkt und in einer Verteilbreite auf dem Feld abgelegt wird. Die Leitbleche werden gemeinsam in Abhängigkeit von der von einem Neigungssensor ermittelten Hangneigung quer zur Fahrtrichtung des Mähdreschers automatisch über einen Motor verstellt, um das Erntegut bei der Erntefahrt am Hang entsprechend weit hangaufwärts zu schleudern und damit zu verhindern, dass das Häckselgut in den talseitigen Bestand geworfen wird.

Nachteilig bei dieser Verteileinrichtung ist, dass sie nur bei Mähdreschern zweckmäßig einsetzbar ist, bei denen sich das Maschinengehäuse und/oder die Verteilvorrichtung bei der Erntefahrt am Hang zur Neigung des Feldes ausrichtet und die Verteileinrichtung somit einen gleichbleibenden Abstand zum Feldboden aufweist. Bei Hangmähdreschern, bei denen das Maschinengehäuse und/oder die Verteileinrichtung bei der Erntefahrt am Hang mit einer Hangausgleichseinrichtung zur Vertikalen ausgerichtet wird, weist die Verteileinrichtung hangaufwärts einen kürzeren Abstand und talseitig einen größeren Abstand zum Feldboden auf. Diese Abstände der Verteileinrichtung begrenzen die Wurfbahnen des Erntegutes. Eine Verstellung der Streubreite in Richtung Hang würde bewirken, dass die Erntegutmenge, die hangseitig schon vor dem Erreichen der gewünschten Streubreite auf den im Winkel zur Wurfbahn des Erntegutes verlaufenden Feldboden auftrifft, ansteigt.

Die Druckschrift WO 2005/102027 A1 offenbart einen Mähdrescher mit einer Verteilvorrichtung, deren Ladeklappe Leitschaufeln aufweist und die in separate Bereiche aufgeteilt ist, welche unabhängig voneinander einstellbar, insbesondere verschiebbar oder verschwenkbar, sind. Dadurch können verschiedene Verteileffekte erzielt werden.

Der vorliegenden Erfindung liegt daher die Aufgabe zugrunde, die Nachteile des Standes der Technik zu vermeiden und insbesondere eine Vorrichtung anzugeben, bei der das Häckselgut unabhängig von der Hangneigung in gleichbleibender Verteilbreite auf dem Feld abgelegt wird.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem der Verteilvorrichtung wenigstens ein Leitelement nachgeordnet ist, mit dem die Gutbewegungsrichtung des aus der Verteilvorrichtung austretenden Erntegutes zumindest in vertikaler Richtung änderbar ist kann das Häckselgut unabhängig von der Hangneigung in gleichbleibender Verteilbreite auf dem Feldboden abgelegt werden.

Dadurch, dass das Leitelement in Abhängigkeit von der Neigung des Feldbodens verstellbar ist, kann die Wurfbahn des Häckselgutes entsprechend der Hangneigung angepasst werden.

Die Verstellbarkeit der Leitelemente ist in einer vorteilhaften Weiterbildung der Erfindung zudem so gestaltet, dass eine größere Wurfweite durch Einstellung einer höheren Wurfparabel für das Erntegutes realisiert wird.

Indem das jeweilige Leitelement in einer vorteilhaften Ausgestaltung das Leitelement flächig ausgebildet ist und in Gutabgaberichtung eine in vertikaler Richtung weisende Wölbung aufweist, kann die Gutumlenkung auf konstruktiv einfache Weise und dennoch präzise vorgenommen werden. Indem die Wölbung nur den äußeren Bereichen der Leitelemente angeformt ist, wird zudem Störungen im Gutfluss während des Passieren der Leitelemente entgegengewirkt.

Eine effiziente Anpassung der Verteilbreite hangaufwärts wird in vorteilhafter Ausgestaltung der Erfindung dann erreicht, wenn die Verteilvorrichtung ein oder mehrere Wurfgebläse umfasst und jedem Wurfgebläse zumindest im rückwärtigen untenseitigen Bereich ein Gutleitelement in der Weise zugeordnet ist, dass die Wölbung des jeweiligen Gutleitelementes in vertikaler Richtung aufwärts gerichtet ist Analog hierzu wird eine effiziente Anpassung der Verteilbreite hangabwärts dann erreicht, wenn dem oder den Wurfgebläsen im rückwärtigen und obenseitigen Bereich weitere Gutleitelement in der Weise zugeordnet sind, dass die Wölbung des jeweiligen Gutleitelementes in vertikaler Richtung abwärts gerichtet ist.

In vorteilhafter Ausgestaltung der Erfindung nimmt die Wölbung in Richtung der äußeren Bereiche der Leitelemente zu, sodass mit zunehmendem Einfluss der Neigung des Bodens auf die Verteilbreite auch die Intensität der Gutumlenkung zunimmt.

In einer vorteilhaften Ausgestaltung der Erfindung ist die Verteileinrichtung an einem Maschinengehäuse angeordnet ist wobei das Maschinengehäuse mit einem Hangausgleichssystem gegenüber dem Feldboden ausrichtbar ist, so dass die mit dem Maschinengehäuse verbundenen Arbeitsorgane auch in hängigem Gelände eine annähernd horizontale Position einnehmen und damit auch bei der Erntefahrt am Hang optimale Ergebnisse erzielen.

In vorteilhafter Ausgestaltung der Erfindung sind dem Maschinengehäuse ein oder mehrere Neigungssensoren zugeordnet und wobei die von den Neigungssensoren generierten Neigungssignale an eine Steuer- und Auswerteinheit übermittelt werden und die Steuer- und Auswerteinheit zumindest unter Berücksichtigung dieser Neigungssignale Steuersignale generiert, die eine Einstellung des Hangausgleichssystems in der Weise bewirken, dass zumindest das Maschinengehäuse in einer nahezu waagerechten Position gehalten wird. Im einfachsten Fall wird dies dadurch erreicht, dass die Einstellung des Hangausgleichssystems durch Druckbeaufschlagung oder Druckentlastung von dem Hangausgleichsystem zugeordneten Hubzylinder erfolgt.

In einer vorteilhaften Ausgestaltung der Erfindung ist es vorgesehen, dass die Stellung des zumindest einen Hangausgleichssystems gegenüber dem Maschinengehäuse mit einem Drehwinkelsensor erfasst wird, wobei der Drehwinkelsensor abhängig von der Stellung des Hangausgleichssystems zum Maschinengehäuse Neigungssignale generiert. Auf diese Weise wird ein konstruktiv einfaches System zur Ermittlung der Hangneigung geschaffen.

In einer weiteren vorteilhaften Ausführung der Erfindung weist der Mähdrescher eine pendelnde Hinterachse auf und die Position der Hinterachse gegenüber dem Maschinengehäuse wird mit einem Drehwinkelsensor erfasst, wobei der Drehwinkelsensor abhängig von der Stellung des Hangausgleichssystems zum Maschinengehäuse Neigungssignale generiert, so dass auch über diese Drehwinkelsensoren auf einfache Weise die Neigung des Feldbodens ermittelt werden kann.

Indem die Steuer- und Auswerteeinheit zumindest aus dem der pendelnden Hinterachse zugeordneten Drehwinkelsensor und/oder dem dem Hangausgleichssystem zugeordneten Drehwinkelsensor generierten Neigungssignalen wenigstens ein Steuersignal zur Einstellung der Leitelemente generiert wird ein Regelungssystem geschaffen, welches sehr effizient die Verteilbreite an sich ändernde Hangneigungen anpassen kann,

Eine sehr zuverlässig arbeitende Verstelleinrichtung ergibt sich dann, wenn in vorteilhafter Ausgestaltung jedem Leitelement ein Stellglied zur Verschwenkung des jeweiligen Leitelementes zugeordnet ist und wobei die in der Steuer- und Auswerteinheit generierten Steuersignale als Verstellwegsignale eine Verstellung des jeweiligen Stellgliedes bewirken,

Eine effiziente Anpassung der Verteilbreite an die Arbeitsbreite wird sowohl hangaufwärts als auch hangabwärts dann erreicht, wenn das bergseitig und untenseitig angeordnete Leitelement um eine Schwenkachse in vertikaler Richtung nach oben verschwenk wird und das talseitig und obenseitig angeordnete Leitelement um eine Schwenkachse in vertikaler Richtung nach unten verschwenkt werden kann.

Indem die Lage des Leitelements über zumindest einen Wegesensor erfasst wird, der den aktuellen Verstellweg des jeweiligen Stellgliedes erfasst und an die Steuer- und Auswerteinheit übergibt, wobei in der Steuer- und Auswerteinheit solange eine Anpassung des Verstellweges vornimmt, bis der Verstellweg dem von der Steuer- und Auswerteinheit generierten Steuersignal entspricht, wird eine präzise Überwachung der Position des jeweiligen Leitelementes möglich.

Weitere vorteilhafte Ausgestaltungen sind Gegenstand weiterer Unteransprüche und werden nachfolgend an Hand des in mehreren Figuren dargestellten Ausführungsbeispiels näher erläutert.

Es zeigen:
- Fig. 1: eine schernatische Seitenansicht eines Mähdreschers bei der Erntefahrt.
- Fig. 2: eine Rückansicht der landwirtschaftlichen Arbeitsmaschine nach Fig. 1 bei der Erntefahrt in der horizontalen Ebene,
- Fig. 3: eine Rückansicht der landwirtschaftlichen Arbeitsmaschine nach Fig. 1 bei der Erntefahrt am Hang.

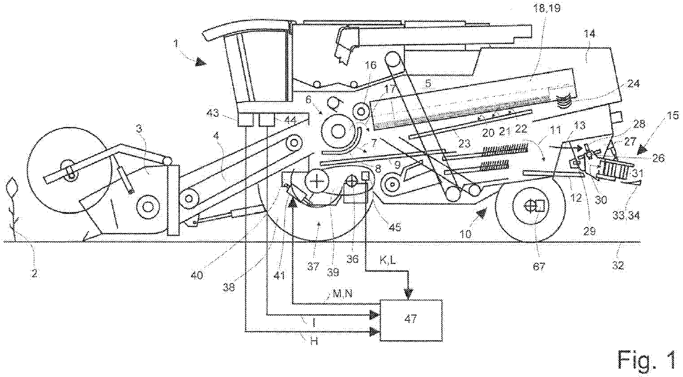

Fig.1 zeigt eine Seitenansicht einer als Mähdrescher 1 ausgeführten landwirtschaftlichen Arbeitsmaschine bei der Erntefahrt. Das Erntegut 2 wird zunächst von einem Schneidwerk 3 aufgenommen, welches das Erntegut 2 einem Schrägförderer 4 zuführt, der frontseitig am Mähdrescher 1 angeordnet ist. Der Schrägförderer 4 übergibt das Erntegut 2 an ein im Maschinengehäuse 5 des Mähdreschers 1 angeordnetes Dreschwerk 6. Das Dreschwerk 6 bearbeitet das Erntegut 2 intensiv, so dass die Körner aus den Früchten des Ernteguts 2 herausgelöst werden. Ein aus zum überwiegenden Teil aus Körnern bestehendes Korn-Spreu-Gemisch 7 wird an dem Dresch- und Abscheidekorb 8 des Dreschwerks 6 abgeschieden und gelangt über einen Vorbereitungsboden 9 zu einer an sich bekannten und daher hier nicht näher erläuterten Reinigungseinrichtung 10, in der die Körner von den Nichtkornbestandteilen, das heißt von Halm- und Spreuteilen getrennt werden. Der über die Reinigungseinrichtung 10 überlaufende im wesentlichen aus Kurzstroh und Spreu bestehende Siebüberlauf 11 gelangt über einen Zuführboden 12 in eine noch näher zu beschreibende Strohzerkleinerungs- und Verteileinrichtung 15, die zumindest einen unterhalb einer Strohausfallhaube 14 angeordneten Strohhäcksler 13 sowie eine diesem nachgeordnete Verteileinrichtung 31 umfasst.
Im rückwärtigen Bereich ist dem Dreschwerk 6 eine entgegen dem Uhrzeigersinn rotierende Wendetrommel 16 zugeordnet, die den aus dem Dreschwerk 6 austretenden, im wesentlichen aus ausgedroschenen Halmen bestehenden Gutstrom 17 annimmt und einer Trennvorrichtung 18 wie beispielsweise zwei nebeneinander angeordneten Trennrotoren 19 zuführt, die den Gutstrom 17 in den rückwärtigen Bereich des Mähdreschers 1 fördern Dabei werden die noch im Gutstrom 17 befindlichen Körner 20 sowie eventuell Kurzstroh 21 und Spreu 22 abgetrennt, indem sie durch die mit Sieböffnungen versehenen Trennrotoren 19 hindurch auf einen Rücklaufboden 23 fallen. Die Trennvorrichtung 18 ist nicht auf diese Ausführung beschränkt, so kann die Trenneinrichtung 18 auch als an sich bekannter und deshalb nicht dargestellter Hordenschüttler ausgeführt sein. Es ist aber auch denkbar, dass die Trenneinrichtung 18 als Einrotor- oder Doppelrotorsystem ausgebildet ist, bei dem jeder Rotor einen sogenannten Dresch- und Abscheidebereich aufweist.

Der Rücklaufboden 23 transportiert Körner 21, Kurzstroh 20 und Spreu 22 ebenfalls zum Vorbereitungsboden 9 und über diesen ebenfalls in die Reinigungseinrichtung 10, in welcher die Körner 21 vom Kurzstroh 20 und von der Spreu 22 getrennt werden. Das am Ende der Trennrotoren 19 aus den Trennrotoren 19 austretende, zum größten Anteil aus Stroh bestehende Erntegut 24 wird über die Strohausfallhaube 14 dem Strohhäcksier 13 zugeführt. Der Strohhäcksler 13 weist eine rotierende Häckslerwelle 26 auf, die in dem Häckslergehäuse 27 gelagert ist. Die Häckslerwelle 26 ist mit beweglichen Messern 28 besetzt, die mit im Häckslergehäuse 27 fest angeordneten Gegenmessern 29 kämmen. Mit diesen Messern 28, 29 wird das Erntegut 24 zu Häckselgut 30 zerkleinert und beschleunigt und mit hoher Geschwindigkeit einer an dem Maschinengehäuse 5 angeordneten Verteilvorrichtung 31 zugeführt, mit der das Häckselgut 30 auf dem Feldboden 32 verteilt wird. Der Verteilvorrichtung 31 sind an späterer Stelle näher erläuterte erfindungsgemäße Leitelemente 33, 34 nachgeordnet, mit denen das aus der Verteileinrichtung 31 austretende Häckselgut 30 in noch näher zu beschreibender Weise zumindest in vertikaler Richtung eine Änderung der Gutaustrittsrichtung verfährt

Im dargestellten Ausführungsbeispiel ist der Mähdrescher 1 als sogenannter Hangmähdrescher ausgeführt, dessen Vorderachse 36 ein an sich bekanntes Hangausgleichssystem 37 aufnimmt, wobei beiden Laufrädern 38 der Vorderachse 36 ein solches Hangausgleichssystem 37 zugeordnet ist. Jedes Hangausgleichsystem 37 wird im wesentlichen von einem mit dem jeweiligen Laufrad 38 in Wirkverbindung stehendem Radgetriebe 39 gebildet, welches um die Vorderachse 36 verschwenkbar an dieser angeordnet ist. Die Verschwenkbarkeit der Radgetriebe 39 wird dadurch erreicht, dass zwischen den Konsolen 40 der Vorderachse 36 und den Radgetriebe 39 jeweils ein Hubzylinder 41 angeordnet ist, dessen Druckbeaufschlagung oder Druckentlastung zu einem Verschwenken des zugehörigen Radgetriebes 39 im oder entgegen dem Uhrzeigersinn um die Vorderachse 36 führt. Indem die Radgetriebe 39 in der beschriebenen Weise um die Vorderachse 36 verschwenkt werden, ändern zugleich die mit den Radgetrieben 39 verbundenen Laufräder 38 ihre Position am Mähdrescher 1 sowohl in vertikaler als auch in horizontaler Richtung, wodurch das Maschinengehäuse 5 ausgerichtet werden kann.

Der dargestellte Mähdrescher 1 weist an verschiedenen Stellen in noch näher zu beschreibende Weise unterschiedliche Sensoren auf. Hierzu gehören zunächst sogenannte Neigungssensoren 43, 44, die fest mit dem Maschinengehäuse 5 verbunden sind. Die Neigungssensoren 43, 44 erfassen die Längs- und Querneigung des Maschinengestells 5 beziehungsweise des Feldbodens 32 und generieren abhängig von dieser Längs- beziehungsweise Querneigung Neigungssignale H,I.

Den Hangausgleichssystemen 37 des Mähdreschers 1 sind weiterhin Drehwinkelsensoren 45 zugeordnet, die die Verschwenkwinkel 41 der Radgetriebe 39 gegenüber der Vorderachse 36 und damit die Lage der Laufräder 38 zum Maschinengehäuse 5 ermitteln. Die Drehwinkelsensoren 45 generieren proportional zur Lage der Radgetriebe 34 zur Vorderachse 36 Neigungssignale K, L.

Die Neigungssensoren 43, 44 und die Drehwinkelsensoren 45 sind mit einer Steuer- und Auswerteinheit 47 verbunden. Die Steuer- und Auswerteinheit 47 ermittelt in Abhängigkeit von den von den Neigungssensoren 43, 44 generierten Neigungssignalen H, I und in Abhängigkeit von den von den Drehwinkelsensoren 45 generierten Neigungssignalen K, L Steuersignale M, N. Die Steuersignal M, N regeln die Druckbeaufschlagung beziehungsweise Druckentlastung der Hubzylinder 41 der Hangausgleichssysteme 37, wobei jedes Hangausgleichssystem 37 getrennt angesteuert wird, so dass jedes Laufrad 38 individuell an das Bodenprofil des Feldbodens 32 angepasst werden kann. Auf diese Weise ist es möglich die exakte Längs- und Querneigung des Maschinengehäuses 5 sowie die genaue Position der Laufräder 38 zu ermitteln und diese so zu verändern, dass das Maschinengestell 5 und die damit verbundenen Arbeitsorgane 10, 18 eine annähernd horizontale Position einnehmen, damit diese auch in hängigem Gelände optimale Ergebnisse erzielen.

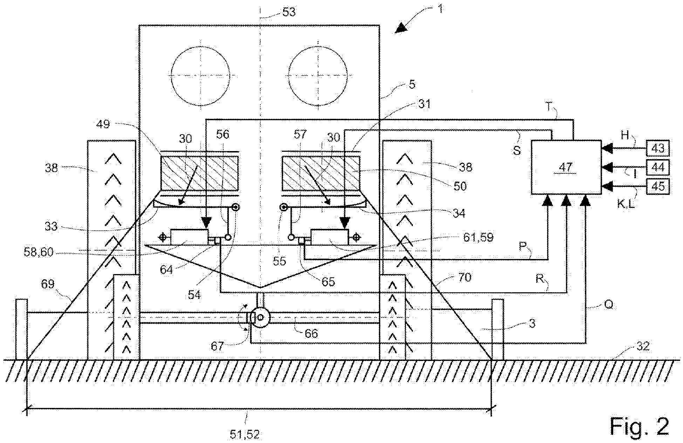

Fig. 2 zeigt die Rückansicht des in Fig.1 dargestellten Mähdrescher 1 bei der Erntefahrt auf horizontalem Feldboden 32. Die Verteileinrichtung 31 besteht aus zwei nebeneinander am Maschinengehäuse 5 angeordneten Wurfgebläsen 49, 50, die das auf Wurfbahnen austretende Häckselgut 30 auf einer Verteilbreite 51 hinter dem Mähdrescher 1 auf dem Feldboden 32 verteilen, wobei die Verteilbreite 51 im dargestellten Ausführungsbeispiel vorteilhafterweise der Arbeitsbreite 52 des Schneidwerks 3 des Mähdreschers 1 entspricht und sowohl die Arbeitsbreite 51 als auch die Verteilbreite 52 symmetrisch zur Mittelachse 53 des Mähdreschers 1 angeordnet sind. Zur Vereinfachung sind in Fig. 2 nur die äußeren Wurfbahnen 69, 70 des Häckselgutes 30 dargestellt. Die den Wurfgebläsen 49, 50 nachgeordneten erfindungsgemäßen Leitelemente 33, 34 sind jeweils um eine annähernd senkrecht zur Mittelachse 53 des Mähdreschers 1 verlaufende Achse 54, 55 verschwenkbar an dem Maschinengehäuse 5 angeordnet, wobei zwischen dem Maschinengehäuse 5 und einem am zugehörigen Leitelement 33, 34 starr angeordneten Hebel 56, 57 jeweils ein Stellglied 58, 59 angelenkt ist, mit dem das jeweilige Leitelement 33, 34 verschwenkt werden kann. Die Stellglieder 58, 59 sind im dargestellten Ausführungsbeispiel als Linearmotoren 60, 61 ausgerührt Es ist jedoch auch denkbar, die Stellglieder 58, 59 als Hydraulikzylinder auszuführen. Die Leitelemente 33, 34 sind unterhalb der Wurfgebläse 49, 50 angeordnet, so dass das radial aus den Wurfgebläsen 49, 50 austretende Häckselgut 30 nicht durch die Leitelemente 33, 34 umgelenkt wird. Die momentanen Positionen der Leitelemente 33, 34 werden jeweils über den Linearmotoren 60. 61 zugeordnete Wegesensoren 64, 65 erfasst, die proportional zum aktuellen Verstellweg der Linearmotoren 61, 62 Positionssignale P, R generieren.

Das Maschinengehäuse 5 ist im hinteren Bereich des Mähdreschers 1 auf einer pendelnden Hinterachse 66 gelagert, die sich an die Neigung des Feldbodens 32 anpasst. Der pendelnden Hinterachse 66 des Mähdreschers 1 ist ein Drehwinkelsensor 67 zugeordnet, der die momentane Lage der Hinterachse 66 zum Maschinengehäuse 5 erfasst und lageabhängig ein Neigungssignal Q generiert. Alternativ kann der pendelnde Hinterachse 66 auch ein Neigungssensor zugeordnet sein, mit dem die Neigung des Feldbodens 32 ermittelbar ist.

Die Wegesensoren 64, 65 an den Linearmotoren 61, 62 und der Drehwinkelsensor 67 an der pendelnden Hinterachse 66 sind ebenfalls mit der Steuer- und Auswerteeinheit 47 verbunden und übergeben an diese das von dem Drehwinkelsensor 67 erzeugte Neigungssignal Q und die von den Wegesensoren 64, 65 erzeugten Positionssignale P, R. Während die von den am Maschinengestell 5 fixierten Neigungssensoren 43, 44 generierten Neigungssignale H, I zur Definition von Steuersignalen M, N für die Hubzylinder 41 der Hangausgleichssysteme 37 herangezogen werden, dienen die von den verschiedenen Drehwinkelsensoren 45, 67 generierten Neigungssignale K,L,Q zunächst zur Ermittlung der Auslenkung der Laufräder 38 der Vorderachse 36 sowie der Auslenkung der pendelnd gelagerten Hinterachse 66. Zugleich werden diese Neigungssignale K,L,Q, wie nachfolgen näher beschrieben, auch zur Generierung von Steuersignalen S, T herangebogen, die ein Ein- oder Ausfahren der jeweiligen Linearmotoren 60, 61 derart bewirken, dass die erfindungsgemäßen Leitbleche 33, 34 in Abhängigkeit von der Neigung des Feldbodens 32 verschwenkt werden.

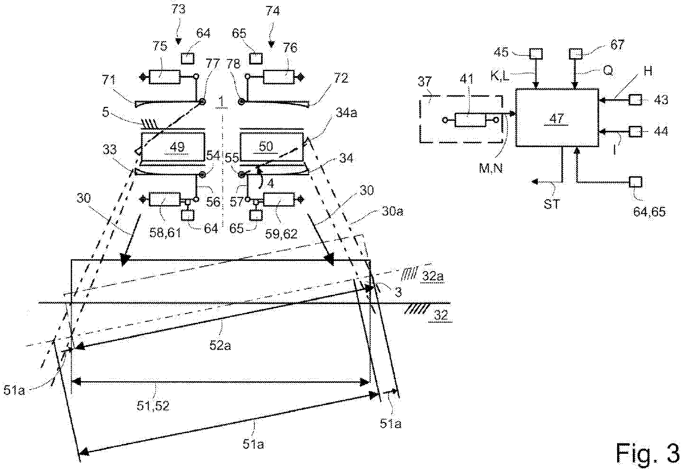

In der schematischen Darstellung nach Fig. 3 wird nun die Erfindung im Detail beschrieben. In ebenem Gelände würde der Mähdrescher 1 nahezu horizontale zum Boden 32 ausgerichtet sein, wobei die Wurfgebläse 49, 50 wegen ihrer starren Anlenkung am Mähdrescher 1 ebenfalls horizontal ausgerichtet sind. In diesem Fall haben die Wurfgebläse 49, 50 in an sich bekannter Weise die Verteileigenschaft, dass das die Wurfgebläse 49, 50 durchlaufende Häckselgut 30 über eine Verteilbreite 51 auf dem Boden 32 abgelegt wird, die der Arbeitsbreite 52 des Schneidwerks 3 entspricht. Überfährt der Mähdrescher 1 nun einen Boden 32a, der eine deutliche Hangneigung aufweist, würde das bereits beschriebene Hangausgleichssystem 37 den Mähdrescher 1 und die mit ihm fest verbundenen Wurfgebläse 49, 50 wieder in eine horizontale Position bewegen. Dabei ändert sich die von den Wurfgebläsen 49, 50 realisierte Vertelibreite 51a in der Weise, dass sich die Wurfweite hangaufwärts verkürzt, während die Wurfweite hangabwärts zunimmt. Hier setzt nun die Erfindung an. Damit zumindest hangaufwärts die Verteilbreite 51a und die Arbeitsbreite 52a in einem ähnliche Bereich enden, muss der aus den Wurfgebläsen 49, 50 austretende Gutstrom 30 stärker bergauf ausgelenkt werden. Dies geschieht in erfindungsgemäßer Weise dadurch, dass zumindest das hangaufwärts angeordnete Leitelement 34 proportional zur Hangneigung ausgelenkt wird, sodass sich zumindest hangaufwärts wieder die ursprüngliche Verteilbreite 51 einstellt. Wie bereits beschrieben wird dies im einfachsten Fall dadurch erreicht, dass das hangaufwärts gelegene Leitelement 34 durch Verstellung des ihm zugeordneten Stellgliedes 59 um seine Schwenkachse 55 in vertikaler Richtung ausgelenkt wird, wobei die Auslenkung ϕ durch die Steuer- und Auswerteinheit 47 so in Abhängigkeit von der Verschwenkung des Maschinengehäuses 5 bestimmt wird, dass zumindest hangaufwärts die Verteilbreite 51a wieder mit der Arbeitsbreite 52a zusammenfällt. In analoger Weise wird die Verstellung des weiteren Leitelementes 33 vorgenommen, wenn der Mähdrescher 1 in umgekehrter Richtung den Boden 32 überquert, sodass das in Figur 3 hangabwärts weisende Leitelement 33 dann hangaufwärts angeordnet ist.

Aus Figur 3 ist zudem ersichtlich, dass sich bei geneigtem Boden 32a hangabwärts eine größere Wurfweite einstellt, sodass die Verteilbreite 51a des Erntegutes 30 hangabwärts über die Arbeitsbreite 52a hinausgehen würde Dies kann in vorteilhafter Ausgestaltung der Erfindung dadurch vermieden werden, dass den Wurfgebläsen 49, 50 zudem obenseitig weitere Leitelemente 71, 72 und zugehörige Verstellmechanismen 73, 74 zugeordnet sein können, die im einfachsten Fall spiegelbildlich zu den bereits beschriebenen Leitelementen 33. 34 und ihren Stellgliedern 58, 59 ausgeführt und angesteuert sind. Für diesen Fall würde die Steuer- und Auswerteinheit 47 die Verstellung der Stellglieder 75, 76 in der Weise bewirken, dass das jeweils hangabwärts angeordnete Leitelement 71, 72 um seine Schwenkachse 77, 78 in Richtung Boden 32a verschwenkt wird, sodass das aus den Wurfgebläsen 49, 50 austretende Erntegut 30 in Richtung Boden 32 umgelenkt wird, Im Ergebnis führt dies dazu, dass auch in dem hangabwärts liegenden Bereich die Vertesibreite 51a und die Arbeitsbreite 52a nahezu zusammenfallen,

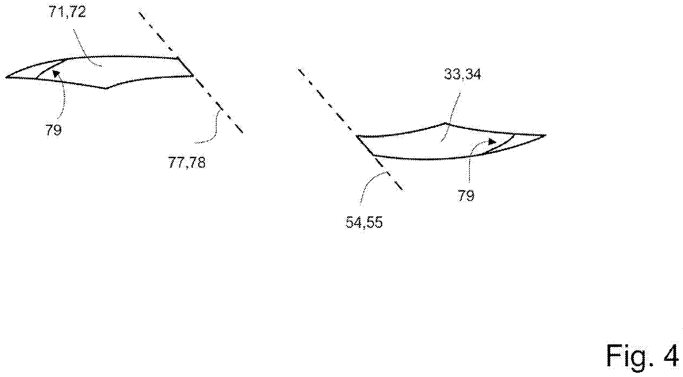

Der Effekt der Gutumlenkung wird auch dadurch noch erhöht, dass die Leitelemente 33, 34, 71, 72 gemäß der Detailansicht nach Fig. 4 gutabgabeseitig gewölbt ausgeführt sind, wobei bei den untenseitig den Wurfgebläsen 49, 50 zugeordneten Leitelemente 33, 34 die Wölbung 79 vertikal nach oben gerichtet ist während sie bei den oberhalb der Wurfgebläse 49, 50 angeordneten Leitelementen 71, 72 vertikal nach unten weist. In einer vorteilhaften Ausgestaltung sind den Gutleitelementen 33, 34, 71, 72 die Wölbungen 79 nur in ihren gutabgabeseitigen Randbereichen angeformt, Indem die Wölbung in Richtung der Randbereiche zudem zunimmt, wird sichergestellt, dass mit zunehmendem Einfluss der Neigung des Bodens 32a auf die Verteilbreite 51 die Intensität der Gutumlenkung ebenfalls steigt, sodass auch bei Hangneigung eine optimale Verteilbreite 51 a erreicht wird.

Zur Realisierung einer hochpräzisen Verstellung der verschiedenen Leitelemente 33, 34, 71, 72 ist es vorgesehen, dass die Steuer- und Auswerteeinheit 47 zumindest aus dem der pendelnden Hinterachse 66 zugeordneten Drehwinkelsensor 67 und/oder dem dem Hangausgleichssystem 37 zugeordneten Drehwirikelsensor 45 generierten Neigungssignalen K,L,Q wenigstens ein Steuersignal S. T generiert. Weiter ist, wie bereits beschrieben, jedem Leitelement 33, 34, 72, 73 ein Stellglied 58, 59, 75, 76 zur Verschwenkung des jeweiligen Leitelementes 33, 34, 72, 73 zugeordnet, wobei die in der Steuer- und Auswerteinheit 47 generierten Steuersignale S, T als Verstellwegsignale eine Verstellung des jeweiligen Stellgliedes 58, 59, 75, 76 bewirken. Im einfachsten Fall erfolgt die Verstellung der Leitelemente 33, 34, 71, 72 durch Ein- oder Ausfahren der Koppelstange der Stellglieder 58, 59, 75, 76, sodass die Leitelemente 33, 34, 71, 72 um ihre jeweilige Schwenkachse 54, 55, 77, 78 verschwenkt werden, wobei das jeweils bergseitig und untenseitig angeordnete Leitelement 33, 34 um seine Schwenkachse 54, 55 in vertikaler Richtung nach oben verschwenk wird, während das talseitig und obenseitig angeordnete Leitelement 71, 72 um seine Schwenkachse 77, 78 in vertikaler Richtung nach unten verschwenk wird.

Es liegt im Rahmen der Erfindung, dass die am Maschinengehäuse 5 fixierten Neigungssensoren 43, 44 und die verschiedenen Drehwinkelsensoren 45, 67 mit der Steuer und Auswerteeinheit 47 verbunden sind und die Steuer- und Auswerteeinheit 47 die von den Neigungssensoren 43, 44 generierten Neigungssignale H, I und die von den Drehwinkelsensoren 45, 67 generierten Neigungssignale K,L,Q sowie die Steuersignale M, N der Hubzylinder 41 des Hangausgleichssystems 37 zur Definition der Steuersignale S, T heranzieht, mit der die Linearmotoren 61, 62, 75, 76 ein- und ausgefahren werden. Es liegt zudem im Rahmen der Erfindung, dass die Steuer- und Auswerteinheit 47 nur einen Teil der zuvor beschriebenen Signale berücksichtigt.

Ferner wird die Lage aller Leitelemente 33, 34, 71, 72 über Wegesensoren 64, 65 erfasst, die den aktuellen Verstellweg des jeweiligen Stellgliedes 58, 59, 75, 76 erfasst und an die Steuer- und Auswerteinheit 47 übergibt, wobei die Steuer- und Auswelieinheit 47 solange eine Anpassung des Verstellweges vornimmt, bis der Verstellweg dem von der Steuer- und Auswerteinheit 47 generierten Steuersignal S, T entspricht.

Zudem liegt es im Rahmen der Erfindung, dass die Leitelemente 33, 34, 71, 72 zusätzlich in Abhängigkeit von der Windrichtung und Windstärke verstellt werden.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Ansprüche zu verlassen.

**Bezugszeichenliste:**

| | | | |
|---|---|---|---|
| 1 | Mähdrescher | 31 | Verteileinrichtung |
| 2 | Erntegut | 32 | Feldboden |
| 3 | Schneidwerk | 33 | Leitelement |
| 4 | Schrägförderer | 34 | Leitelement |
| 5 | Maschinengehäuse | 35 | |
| 6 | Dreschwerk | 36 | Vorderachse |
| 7 | Korn-Spreu-Gemisch | 37 | Hangausgleichssystem |
| 8 | Abscheidekorb | 38 | Laufrad |
| 9 | Vorbereitungsboden | 39 | Radgetriebe |
| 10 | Reinigungseinrichtung | 40 | Konsole |
| 11 | Siebüberlauf | 41 | Hubzylinder |
| 12 | Zuführboden | 42 | |
| 13 | Strohhäcksler | 43 | Neigungssensor |
| 14 | Strohausfallhaube | 44 | Neigungssensor |
| 15 | Strohzerkleinerungs- und -verteileinrichtung | 45 | Drehwinkelsensor |
| 16 | Wendetrommel | 47 | Steuer- und Auswerteeinheit |
| 17 | Gutstrom | 48 | |
| 18 | Trennvorrichtung | 49 | Wurfgebläse |
| 19 | Trennrotor | 50 | Wurfgebläse |
| 20 | Kurzstroh | 51 | Verteilbreite |
| 21 | Körner | 52 | Arbeitsbreite |
| 22 | Spreu | 53 | Mittelachse |
| 23 | Rücklaufboden | 54 | Achse |
| 24 | Erntegut | 55 | Achse |
| 25 | | 56 | Hebel |
| 26 | Häckslerwelle | 57 | Hebel |
| 27 | Häckslergehäuse | 58 | Stellglied |
| 28 | bewegliche Messer | 59 | Stellglied |
| 29 | Gegenmesser | 60 | Linearmotor |
| 30 | Häckselgut | 61 | Linearmotor |
| 62 | | | |
| 63 | | | |
| 64 | Wegesensor | | |
| 65 | Wegesensor | | |
| 66 | pendelnde Hinterachse | | |
| 67 | Drehwinkelsensor | | |
| 68 | | | |
| 69 | Wurfbahn | | |
| 70 | Wurfbahn | | |
| 71 | Leitelement | | |
| 72 | Leitelement | | |
| 73 | Verstellmechanismus | | |
| 74 | Verstellmechanismus | | |
| 75 | Stellglied | | |
| 76 | Stellglied | | |
| 77 | Schwenkachse | | |
| 78 | Schwenkachse | | |
| 79 | Wölbung | | |
| | | | |
| H | Neigungssignal | | |
| I | Neigungssignal | | |
| K | Neigungssignal | | |
| L | Neigungssignal | | |
| M | Steuersignal | | |
| N | Steuersignal | | |
| P | Positionssignal | | |
| Q | Neigungssignal | | |
| R | Positionssignal | | |
| S | Steuersignal | | |
| T | Steuersignal | | |

## Patentansprüche

1. Mähdrescher (1) mit einer Verteilvorrichtung (31) zur Verteilung eines aus dem Mähdrescher (1) austretenden Erntegutes (30) auf dem Feldboden (32), **dadurch gekennzeichnet,**
**dass** der Verteilvorrichtung (31) wenigstens ein Leitelement (33, 34, 71, 72) nachgeordnet ist, mit dem die Gutbewegungsrichtung des aus der Verteilvorrichtung (31) austretenden Erntegutes (30) zumindest in vertikaler Richtung änderbar ist.

2. Mähdrescher (1) nach Anspruch 1,
**dadurch gekennzeichnet,**
**dass** das Leitelement (33, 34, 71, 72) in Abhängigkeit von der Neigung des Feldbodens (32) verstellbar ist.

3. Mähdrescher (1) nach einem der vorhergehenden Ansprüche,
**dadurch gekennzeichnet,**
**dass** die Verstellbarkeit des Leitelementes (33, 34, 71, 72) eine größere Wurfweite durch Einstellung einer höheren Wurfparabel für das Erntegut (30) bewirkt.

4. Mähdrescher (1) nach einem der vorhergehenden Ansprüche,
**dadurch gekennzeichnet,**
**dass** das Leitelement (33, 34, 71, 72) flächig ausgebildet ist und in Gutabgaberichtung eine in vertikaler Richtung weisende Wölbung (79) aufweist.

5. Mähdrescher (1) nach Anspruch 4,
**dadurch gekennzeichnet,**
**dass** die Wölbung (79) nur in den äußeren Bereichen des Leitelementes (33, 34, 71, 72) angeformt ist.

6. Mähdrescher (1) nach Anspruch 5,
**dadurch gekennzeichnet,**
**dass** die Wölbung (79) in Richtung der äußeren Bereiche des Leitelementes (33, 34, 71, 72) zunimmt.

7. Mähdrescher (1) nach einem der Ansprüche 4 - 6,
**dadurch gekennzeichnet,**
**dass** die Verteilvorrichtung (31) ein oder mehrere Wurfgebläse (49, 50) umfasst und jedem Wurfgebläse (49, 50) zumindest im rückwärtigen untenseitigen Bereich ein Leitelement (33, 34) in der Weise zugeordnet ist, dass die Wölbung (79) des jeweiligen Leitelementes (33, 34) in vertikaler Richtung aufwärts gerichtet ist.

8. Mähdrescher (1) nach Anspruch 7,
**dadurch gekennzeichnet,**
**dass** dem oder den Wurfgebläsen (49, 50) im rückwärtigen und obenseitigen Bereich weitere Leitelemente (71, 72) in der Weise zugeordnet sind, dass die Wölbung (79) des jeweiligen Leitelementes (71, 72) in vertikaler Richtung abwärts gerichtet ist.

9. Mähdrescher (1) nach einem der vorhergehenden Ansprüche,
**dadurch gekennzeichnet,**
**dass** die Verteilvorrichtung (31) an einem Maschinengehäuse (5) angeordnet ist, wobei das Maschinengehäuse (5) mit einem Hangausgleichssystem (37) gegenüber dem Feldboden (32) ausrichtbar ist.

10. Mähdrescher (1) nach Anspruch 9,
**dadurch gekennzeichnet,**
**dass** dem Maschinengehäuse (5) ein oder mehrere Neigungssensoren (43, 44) zugeordnet sind und wobei die von den Neigungssensoren (43, 44) generierten Neigungssignale (H, I) an eine Steuer- und Auswerteinheit (47) übermittelt werden und die Steuer- und Auswerteinheit (47) zumindest unter Berücksichtigung dieser Neigungssignale (H, I) Steuersignale (M, N) generiert, die eine Einstellung des Hangausgleichssystems (37) in der Weise bewirken, dass zumindest das Maschinengehäuse (5) in einer nahezu waagerechten Position gehalten wird.

11. Mähdrescher (1) nach Anspruch 10,
**dadurch gekennzeichnet,**
**dass** die Einstellung des Hangausgleichssystems (37) durch Druckbeaufschlagung oder Druckentlastung von dem Hangausgleichsystem (37) zugeordneten Hubzylindern (41) erfolgt.

12. Mähdrescher (1) nach einem der Ansprüche 9 - 11,
**dadurch gekennzeichnet,**
**dass** die Stellung des zumindest einen Hangausgleichssystems (37) gegenüber dem Maschinengehäuse (5) mit einem Drehwinkelsensor (45) erfasst wird, wobei der Drehwinkelsensor (45) abhängig von der Stellung des Hangausgleichssystems (37) zum Maschinengehäuse (5) Neigungssignale (K, L) generiert.

13. Mähdrescher (1) nach einem der Ansprüche 9 - 12,
**dadurch gekennzeichnet,**
**dass** der Mähdrescher (1) eine pendelnde Hinterachse (66) aufweist und die Position der Hinterachse (66) gegenüber dem Maschinengehäuse (5) mit einem Drehwinkelsensor (67) erfasst wird, wobei der Drehwinkelsensor (45) abhängig von der Stellung des Hangausgleichssystems (37) zum Maschinengehäuse (5) Neigungssignale (Q) generiert.

14. Mähdrescher (1) nach Anspruch 10 und Ansprüche 12 und/oder 13, **dadurch gekennzeichnet,**
**dass** die Steuer- und Auswerteeinheit (47) zumindest aus dem der pendelnden Hinterachse (66) zugeordneten Drehwinkelsensor (67) und/oder dem dem Hangausgleichssystem (37) zugeordneten Drehwinkelsensor (45) generierten Neigungssignalen (K,L,Q) wenigstens ein Steuersignal (S, T) zur Einstellung der Leitelemente (33, 34, 71, 72) generiert.

15. Mähdrescher (1) nach einem der Ansprüche 10 - 14,
**dadurch gekennzeichnet,**
**dass** jedem Leitelement (33, 34, 71, 72) ein Stellglied (58, 59, 75, 76) zur Verschwenkung des jeweiligen Leitelementes (33, 34, 71, 72) zugeordnet ist und wobei die in der Steuer- und Auswerteinheit (47) generierten Steuersignale (S, T) als Verstellwegsignale eine Verstellung des jeweiligen Stellgliedes (58, 59, 75, 76) bewirken.

16. Mähdrescher (1) nach Anspruch 15,
**dadurch gekennzeichnet, dass** ein bergseitig und untenseitig angeordnete Leitelement (33) um eine Schwenkachse (55) in vertikaler Richtung nach oben verschwenkt wird.

17. Mähdrescher (1) nach Anspruch 15,
**dadurch gekennzeichnet,**
**dass** ein talseitig und obenseitig angeordnete Leitelement (71) um eine Schwenkachse (77) in vertikaler Richtung nach unten verschwenkt wird.

18. Mähdrescher (1) nach einem der Ansprüche 15 - 17,
**dadurch gekennzeichnet,**
**dass** die Lage des Leitelements (33, 34, 71, 72) über zumindest einen Wegesensor (64, 65) erfasst wird, der den aktuellen Verstellweg des jeweiligen Stellgliedes (58, 59) erfasst und an die Steuer- und Auswerteinheit (47) übergibt, wobei die Steuer- und Auswerteinheit (47) solange eine Anpassung des Verstellweges vornimmt, bis der Verstellweg dem von der Steuer- und Auswerteinheit (47) generierten Steuersignal (S, T) entspricht.

## Claims

1. A combine harvester (1) comprising a distribution device (31) for distributing a crop material (30) issuing from the combine harvester (1) on the field surface (32),
**characterised in that** arranged downstream of the distribution device (31) is at least one guide element (33, 34, 71, 72 with which the direction of movement of the crop material (30) issuing from the distribution device (31) is variable at least in a vertical direction.

2. A combine harvester (1) according to claim 1 **characterised in that** the guide element (33, 34, 71, 72) is displaceable in dependence on the inclination of the field surface (32).

3. A combine harvester (1) according to one of the preceding claims **characterised in that** the adjustability of the guide element (33, 34, 71, 72) causes a greater projection distance by adjustment of a higher projection parabola for the crop material (30).

4. A combine harvester (1) according to one of the preceding claims **characterised in that** the guide element (33, 34, 71, 72) is flat and has a curvature (79) in the vertical direction in the crop discharge direction.

5. A combine harvester (1) according to claim 4 **characterised in that** the curvature (79) is formed only in the outer regions of the guide element (33, 34, 71, 72).

6. A combine harvester (1) according to claim 5 **characterised in that** the curvature (79) increases in the direction of the outer regions of the guide element (33, 34, 71, 72).

7. A combine harvester (1) according to one of claims 4 to 6 **characterised in that** the distribution device (31) includes one or more projection blowers (49, 50) and a guide element (33, 34) is associated with each projection blower (49, 50) at least in the rearward underside region in such a way that the curvature (79) of the respective guide element (33, 34) is directed upwardly in the vertical direction.

8. A combine harvester (1) according to claim 7 **characterised in that** further guide elements (71, 72) are associated with the projection blower or blowers (49, 50) in the rearward and topside region in such a way that the curvature (79) of the respective guide element (71, 72) is directed downwardly in the vertical direction.

9. A combine harvester (1) according to one of the preceding claims **characterised in that** the distribution device (31) is arranged at a machine housing (5), wherein the machine housing (5) can be oriented with respect to the field surface (32) with a slope compensating system (37).

10. A combine harvester (1) according to claim 9 **characterised in that** one or more inclination sensors (43, 44) are associated with the machine housing (5) and wherein the inclination signals (H, I) generated by the inclination sensors (43, 44) are communicated to a control and evaluation unit (47) and the control and evaluation unit (47) generates control signals (M, N) at least having regard to said inclination signals (H, I), which control signals cause an adjustment of the slope compensating system (37) in such a way that at least the machine housing (5) is held in an almost horizontal position.

11. A combine harvester (1) according to claim 10 **characterised in that** adjustment by the slope compensating system (37) is effected by pressurising or pressure relief of stroke cylinders (41) associated with the slope compensating system (37).

12. A combine harvester (1) according to one of claims 9 to 11 **characterised in that** the position of the at least one slope compensating system (37) with respect to the machine housing (5) is detected with a rotary angle sensor (45), wherein the rotary angle sensor (45) generates inclination signals (K, L) in dependence on the position of the slope compensating system (37) relative to the machine housing (5).

13. A combine harvester (1) according to one of claims 9 to 12 **characterised in that** the combine harvester (1) has a swing rear axle (66) and the position of the rear axle (66) with respect to the machine housing (5) is detected with a rotary angle sensor (67), wherein the rotary angle sensor (45) generates inclination signals (Q) in dependence on the position of the slope compensating system (37) relative to the machine housing (5).

14. A combine harvester (1) according to claim 10 and claim 12 and/or claim 13 **characterised in that** the control and evaluation unit (47) generates at least one control signal (S, T) for adjustment of the guide elements (33, 34, 71, 72) at least from inclination signals (K, L, Q) generated by the rotary angle sensor (67) associated with the swing rear axle (66) and/or the rotary angle sensor (45) associated with the slope compensating system (37).

15. A combine harvester (1) according to one of claims 10 to 14 **characterised in that** an adjusting member (58, 59, 75, 76) is associated with each guide element (33, 34, 71, 72) for pivotal movement of the respective guide element (33, 34, 71, 72) and wherein the control signals (S, T) generated in the control and evaluation unit (47) as adjustment signals cause adjustment of the respective adjusting member (58, 59, 75, 76).

16. A combine harvester (1) according to claim 15 **characterised in that** a guide element (33) arranged at the uphill side and underside is pivoted about a pivot axis (55) upwardly in a vertical direction.

17. A combine harvester (1) according to claim 15 **characterised in that** a guide element (71) arranged at the downhill side and upward side is pivoted about a pivot axis (77) downwardly in a vertical direction.

18. A combine harvester (1) according to one of claims 15 to 17 **characterised in that** the position of the guide element (33, 34, 71, 72) is detected by way of at least one travel sensor (64, 65) which detects the current adjustment travel of the respective adjusting member (58, 59) and communicates same to the control and evaluation unit (47), wherein the control and evaluation unit (47) implements adaptation of the adjustment travel until the adjustment travel corresponds to the control signal (S, T) generated by the control and evaluation unit (47).

## Revendications

1. Moissonneuse-batteuse (1) comportant un dispositif d'éparpillage (31) pour éparpiller sur le sol de champ (32) un produit de récolte (30) sortant de la moissonneuse-batteuse (1), **caractérisée en ce qu'**à la suite du dispositif d'éparpillage (31) est disposé au moins un élément de guidage (33, 34, 71, 72) avec lequel la direction de mouvement de produit du produit de récolte (30) sortant du dispositif d'éparpillage (31) peut être modifiée au moins en direction verticale.

2. Moissonneuse-batteuse (1) selon la revendication 1, **caractérisée en ce que** l'élément de guidage (33, 34, 71, 72) est réglable en fonction de l'inclinaison du sol de champ (32).

3. Moissonneuse-batteuse (1) selon l'une des revendications précédentes, **caractérisée en ce que** l'aptitude au réglage de l'élément de guidage (33, 34, 71, 72) permet d'augmenter la portée de projection en adoptant pour le produit de récolte (30) une parabole de projection plus haute.

4. Moissonneuse-batteuse (1) selon l'une des revendications précédentes, **caractérisée en ce que** l'élément de guidage (33, 34, 71, 72) est de forme plate et présente une courbure (79) orientée en direction verticale dans la direction de distribution du produit.

5. Moissonneuse-batteuse (1) selon la revendication 4, **caractérisée en ce que** la courbure (79) est formée seulement dans les zones extérieures de l'élément de guidage (33, 34, 71, 72).

6. Moissonneuse-batteuse (1) selon la revendication 5, **caractérisée en ce que** la courbure (79) augmente en direction des zones extérieures de l'élément de guidage (33, 34, 71, 72).

7. Moissonneuse-batteuse (1) selon l'une des revendications 4 à 6, **caractérisée en ce que** le dispositif d'éparpillage (31) comprend une ou plusieurs souffleuses (49, 50) et à chaque souffleuse (49, 50) est associé, au moins dans la zone arrière du côté inférieur, un élément de guidage (33, 34) de façon que la courbure (79) de l'élément de guidage (33, 34) respectif soit dirigée vers le haut dans la direction verticale.

8. Moissonneuse-batteuse (1) selon la revendication 7, **caractérisée en ce qu'**à la ou aux souffleuse (s) (49, 50) sont associés, dans la zone arrière et du côté supérieur, d'autres éléments de guidage (71, 72) de façon que la courbure (79) de l'élément de guidage (71, 72) respectif soit dirigée vers bas dans la direction verticale.

9. Moissonneuse-batteuse (1) selon l'une des revendications précédentes, **caractérisée en ce que** le dispositif d'éparpillage (31) est disposé sur un carter de machine (5), le carter de machine (5) étant orientable par rapport au sol de champ (32) à l'aide d'un système de compensation de dévers (37).

10. Moissonneuse-batteuse (1) selon la revendication 9, **caractérisée en ce qu'**un ou plusieurs capteurs d'inclinaison (43, 44) sont associés au carter de machine (5), les signaux d'inclinaison (H, I) générés par les capteurs d'inclinaison (43, 44) étant transmis à une unité de commande et d'analyse (47), et l'unité de commande et d'analyse (47) générant, en tenant compte au moins de ces signaux d'inclinaison (H, I), des signaux de commande (M, N) qui produisent un réglage du système de compensation de dévers (37) de façon qu'au moins le carter de machine (5) soit maintenu dans une position approximativement horizontale.

11. Moissonneuse-batteuse (1) selon la revendication 10, **caractérisée en ce que** le réglage du système de compensation de dévers (37) s'effectue par mise en pression ou détente de vérins (41) associés au système de compensation de dévers (37).

12. Moissonneuse-batteuse (1) selon l'une des revendications 9 à 11, **caractérisée en ce que** la position dudit au moins un système de compensation de dévers (37) par rapport au carter de machine (5) est détectée avec un capteur d'angle de rotation (45), le capteur d'angle de rotation (45) générant des signaux d'inclinaison (K, L) en fonction de la position du système de compensation de dévers (37) par rapport au carter de machine (5).

13. Moissonneuse-batteuse (1) selon l'une des revendications 9 à 12, **caractérisée en ce que** la moissonneuse-batteuse (1) présente un essieu arrière (66) oscillant, et la position de l'essieu arrière (66) par rapport au carter de machine (5) est détectée avec un capteur d'angle de rotation (67), le capteur d'angle de rotation (45) générant des signaux d'inclinaison (Q) en fonction de la position du système de compensation de dévers (37) par rapport au carter de machine (5).

14. Moissonneuse-batteuse (1) selon la revendication 10 et les revendications 12 et/ou 13, **caractérisée en ce que** l'unité de commande et d'analyse (47) génère au moins un signal de commande (S, T) pour régler les éléments de guidage (33, 34, 71, 72) au moins à partir des signaux d'inclinaison (K, L, Q) du capteur d'angle de rotation (67) associé à l'essieu arrière oscillant et/ou du capteur d'angle de rotation (45) associé au système de compensation de dévers (37).

15. Moissonneuse-batteuse (1) selon l'une des revendications 10 à 14, **caractérisée en ce qu'**à chaque élément de guidage (33, 34, 71, 72) est associé un actionneur (58, 59, 75, 76) pour faire pivoter l'élément de guidage (33, 34, 71, 72) respectif, les signaux de commande (S, T) générés dans l'unité de commande et d'analyse (47) produisant, en tant que signaux de course de réglage, un réglage de l'actionneur (58, 59, 75, 76) respectif.

16. Moissonneuse-batteuse (1) selon la revendication 15, **caractérisée en ce qu'**un élément de guidage (33) disposé du côté amont et du côté inférieur est pivoté vers le haut dans la direction verticale autour d'un axe de pivotement (55).

17. Moissonneuse-batteuse (1) selon la revendication 15, **caractérisée en ce qu'**un élément de guidage (71) disposé du côté aval et du côté supérieur est pivoté vers le bas dans la direction verticale autour d'un axe de pivotement (77).

18. Moissonneuse-batteuse (1) selon l'une des revendications 15 à 17, **caractérisée en ce que** la position de l'élément de guidage (33, 34, 71, 72) est détectée par au moins un capteur de déplacement (64, 65) qui détecte la course de réglage instantanée de l'actionneur (58, 59) respectif et la transmet à l'unité de commande et d'analyse (47), l'unité de commande et d'analyse (47) effectuant une adaptation de la course de réglage jusqu'à ce que la course de réglage corresponde au signal de commande (S, T) généré par l'unité de commande et d'analyse (47).
